# EUROPEAN PATENT SPECIFICATION

(11) **EP 3 157 768 B1**
(45) Date of publication and mention of the grant of the patent: **13.11.2019**
(21) Application number: 15750112.3
(22) Date of filing: 18.06.2015
(51) Int. Cl.: B60C 23/12, B60C 23/00, B60C 5/00, B60C 5/08

(54) **SHAPE MEMORY CHAMBER FOR TYRE PRESSURE CONTROL**
KAMMER MIT FORMGEDÄCHTNIS ZUR EINSTELLUNG DES REIFENDRUCKES
CHAMBRE À MÉMOIRE DE FORME POUR LE RÉGLAGE DE LA PRESSION DE PNEUS

(30) Priority: 18.06.2014 CZ 20140420
(43) Date of publication of application: 26.04.2017
(73) Proprietor: Coda Innovations s.r.o., 15000 Praha 5 (CZ)
(72) Inventor: HRABAL, Frantisek, 15000 Praha 5 (CZ)
(74) Representative: Kratochvil, Vaclav
(86) International application number: PCT/IB2015/054600
(87) International publication number: WO 2015/193838

(56) References cited:
- WO-A1-03/049958
- WO-A2-2011/057591
- WO-A2-2013/009583
- DE-A1- 3 433 318

## Description

### Field of technology

This invention comprises a chamber with shape memory for adjusting the pressure in tyres, which either constitutes a part of the tyre or is located adjacent to the tyre wall and is connected at one end to the interior of the tyre and at the other end to the ambient environment.

### The current state of the technology

From technical practice, a variety of solutions are known that enable the adjustment of the pressure in a tyre during its operation. These include, for example, tyres that are provided with an air inlet that is attached to an external source of pressure. The two disadvantages of this solution are the considerable cost of its acquisition and the overall complexity of the entire device.
Self-inflatable tyres are also available. A referential self-inflatable tyre is described in patent applications DE 3433318 A1, CZ PV 2002-1364 and CZ PV 2001-4451. The air inlet chamber is positioned either directly in the wall of the tyre or is adjacent to it. The chamber is periodically either completely compressed or broken, through the rolling deformation of the tyre across it, while the advancing compression of the chamber to the null cross-section of the chamber pushes the medium contained in the chamber ahead and creates a vacuum behind. The chamber, which is in the shape of a tube, is located directly in the tyre wall or adjacent to it where it functions as a peristaltic pump.

### The principle on which the invention is based

The shortcomings of the already existing solutions have been resolved by this chamber that has a shape memory for the adjustment of the pressure in tyres, that is connected at one end to the delivery point of the medium and at the other end to the source of the medium, whereby there are fibres at a mutual distance of 0.001 to 200 mm, preferably 0.01 to 50 mm across at least part of the wall of the chamber, the fibres connecting the opposite walls of the chamber.

In the preferred embodiment, further fibres link the chamber wall to the chamber carrier and/or the fibres are attached to the chamber carrier and/or to the tyre.

The delivery point and/or the source of the medium used is/are the internal space of the tyre and/or the exterior environment of the tyre and/or the reservoir and/or the inner tube and/or the interior of the valve and/or of the regulator. The medium can be air, nitrogen, another gas or a gas mixture.

In another preferred embodiment, the fibres may connect a wall on the inner diameter of the chamber to a wall on the outer diameter of the chamber. The fibres can be parallel to each other or may form patterns and/or polygonal patterns and/or they may intersect or be skewed. The fibres may also either be wavy and/or elastic.

In another preferred embodiment, the chamber carrier is a tyre and/or its inner tube and/or an ancillary structure. This chamber can be attached to the carrier by means of fibres. The fibres preferably comprise a part of the bridge of the chamber and/or of the tyre and/or of the inner tube and/or of the ancillary structure that precludes the collapsing of the chamber with the exception of the effect that the tyre's deformation load has on the chamber.

Either below the actual chamber itself and/or as a part of the chamber, there is a belt that prevents the closing of the chamber from below by the active pressure from the inner tube. The belt will preferably also contain fibres.

The chamber may additionally be provided with bridging that is anchored to the sides of the chamber and thereby the chamber is protected against its expansion. It comprises an inner tube made of an elastic material, which in at least a part of it is implemented with a pattern of fibres for arresting any crack propagation. The chamber and/or its carrier is/are, at least in part, covered with a grid for arresting any crack propagation. The solution may include a bridge, a belt and/or a grid that is made of fibres and/or a fibre pattern designed to arrest any crack propagation. The fibres may be textile and/or metal and/or plastic and/or natural fibres and/or synthetic fibres and/or nanofibers. The chamber will preferably be connected by fibres that are wavy and/or elastic to enable the expansion of the chamber and/or of its carrier.

The chamber will preferably, at least partially, be located in an area that is separated from the tyre material by a layer of a different material and/or that is kept separated in an individual removable unit. A layer of another material may be comprised of fibres, of fabric and/or of film and/or another form of separator. This solution is designed for the wheels of vehicles and/or of other machines and/or equipment, including equipment that is stationary.

In another preferred embodiment, the inner tube is provided with fibres. The fibres may be parallel and/or skewed and/or wavy and/or elastic and/or form a pattern and/or a polygon.

The inner tube will preferably be connected to the chamber and/or to the reinflating device and/or to another device in accordance with this invention. The inner tube will preferably be made of a non-elastic and/or an inelastic and/or a plastic material and will be connected to the chamber and/or to the reinflating device and/or another device, in accordance with any of the preceding claims.

The inner tube is also additionally provided with a valve, which, in addition to the interior of the inner tube from the ambient environment, also hermetically seals the space between the inner tube and the cavity formed by the tyre and the rim from the ambient environment.

The valve, the rim, the tyre and/or another part of the wheel are provided with an outlet that enables the aeration of the space between the inner tube and the tyre and the rim.

Another option is the use of a chamber that is located in an area that is mechanically separated from the tyre material. The part in which the chamber is located is separated from the tyre material by partitioning to arrest any crack propagation. Part of the chamber may be located in a separate section, either physically separated from the tyre material or inside the tyre wall, next to the bead. It may also be located in the ancillary structure, inserted between the tyre wall and at least one item of the set constituting the rim, a hubcap, or the support attached to the rim or to the hubcap. The ancillary structure where the chamber is located is preferably attached either to the rim or to the hubcap or to the tyre wall. The shape of the ancillary structure where the chamber is located can be adapted on one side for a tighter connection to the tyre wall, while on the other side it is dimensionally adapted in order to connect tightly to the rim.

In another embodiment, the chamber is provided with at least one regulator and at least one valve, whereas chamber K has two ends and these two ends are closable by at least one regulator and the valve is positioned between them.

The chamber will preferably have at least two closable inlets to the medium delivery point at opposite ends and between these at least one inlet to the source of the medium or, the chamber will have at least two closable inlets to the source of the medium at opposite ends, and between these at least one inlet to the medium delivery point.

The inlet to the medium delivery point is preferably provided with at least one valve, while the inlet to the source of the medium comprises at least one valve.

The valve preferably comprises at least one of the elements and/or contains at least one of the elements selected from the group comprising: a one-way valve, a two-way valve, a multi-way valve, the closure element, an electronically controlled element, an electronically controlled valve, a gate valve, an element with reference pressure, a spring, a diaphragm.

The regulator may be comprised of at least the elements and/or contains at least one of the elements selected from the group comprising: a one-way valve, a two-way valve, a multi-way valve, the closure element, an electronically controlled element, an electronically controlled valve, a gate valve, an element with reference pressure, a spring, a diaphragm. At least one regulator, equipped with at least one valve, is provided with the elements needed for bidirectional operation.

The chamber and/or the device and/or the inner tube is/are preferably located in the area of the tyre wall, next to its bead.

The chamber may be located in the ancillary structure, inserted between the tyre wall and at least one item of the set constituting the rim, the hubcap, or the support that is attached to the rim or to the hubcap or to the inner tube. At the inlet and/or the outlet of the pump, there is a section with a minimum specified volume.

The pump will preferably be provided with a three-way valve, comprising the inlets of the source for the pump and of the delivery point of the pump, whereby one inlet is provided with a valve, the next inlet is directly connected to the pump and the final inlet is interconnected with the closure element. The interior wall of the pump may be fitted with a ring, whereby the distance of its outer side from the rotation axis of the tyre is equal to 1 to 1.1 times the distance of the lower part of the pump from the rotation axis of the tyre.

The pump will preferably be in the shape of a curved hollow channel, at least one peripheral wall which is at least partially formed by at least one section of the pair of surfaces that lie in the longitudinal direction of the pump and that are positioned mutually at an angle of α = 0 to 120°, whereas if the angle were α > 0°, it would be placed at the connecting edges of these surfaces, located on the far side of the central cross sectional area of the pump.

The length of the chamber will preferably be greater than the length of the tyre circumference that has not been deformed by contact with the ground. The length of the chamber in its preferred embodiment is less than the length of the tyre circumference that has not been deformed by contact with the ground.

The ends of the chamber may be adjacent to each other or they may be closer than 10% of the length of the tyre circumference to each other.

### An explanation of the drawings in the figures

In accordance with this invention chamber with shape memory for adjusting the pressure in the tyres its specific embodiments will be described in greater detail, in the attached drawings. In Fig. 1.1 the chamber is placed on a surface. Figures 1.2, 1.3 and 1.4 depict the deformation of the tyre. Fig. 2.1 shows the selected rectangle of the inner tube surface at the point where the damage occurs. Fig. 2.2 depicts a puncture. Crack propagation is shown in Fig. 2.3. Fig. 2.4 introduces the adjustment that was applied to the tyre. Figures 2.5 and 2.6 show fibres. Fig. 3.1 depicts the tyre together with the inner tube and the valve. In Fig. 3.2 the inner tube has expanded, whereas in Fig. 3.3, it already occupies the entire volume of the tyre. Fig. 3.4 depicts the valve being inserted to its final position. Fig. 3.5 shows the final status. Re-inflating from the source is illustrated in Figures 4.1 to 4.6. Figures 4.7 to 4.9 depict the integrated valve, while Figures 5.0 to 5.5 illustrate the functioning of this valve and Fig. 5.6 depicts its particular embodiments. Figures 6.0a and 6.0b show a regular car tyre with an inner tube, while the design of a tyre with a ring inside it is depicted in Figures 6.1a to 6.3b, while the separate part is shown in Figures 7a and 7b.

### Examples of implementing the technical solution

The invention will additionally be illustratively described using individual examples.

### Example 1

Chamber K with shape memory for adjusting the pressure in tyre P, which comprises a part of tyre P or that is adjacent to the wall of tyre P and is connected at one end to the interior of tyre P and at the other end to the external environment O, is in the shape of a curved hollow channel.

If peristaltic chamber K with shape memory is attached to tyre P and it is compressed towards the axis of tyre P, chamber K closes based on a mutual contact between the upper and the lower walls of chamber K. The upper and the lower walls are located on different radii and they therefore have different circumference lengths. For example, if chamber K has a height of 1 mm and it surrounds the entire circumference of tyre P, the difference between the lengths of the upper and the lower walls will be 2 x pi x 1 mm, i.e. 6.28 mm. At each revolution, therefore, shearing between the upper and lower walls in the range of 6.28 mm will occur. This shearing will create friction, thereby destroying the walls of chamber K and also generating heat.

The deficiencies mentioned above are largely eliminated by chamber K with shape memory for pressure adjustment in tyre P, that constitutes a part of the tyre or is adjacent to the tyre wall and, in accordance with the present invention, is connected at one end to the interior of the tyre or to the chamber K delivery point and at the other end to external environment O or to the source for the chamber. If anchoring fibres are to be guided across chamber K, with a span of 0.5 mm, for example, then the shear will only accumulate between these fibres and will not be transferred behind them. There the shear is distributed evenly along the entire length of chamber K. Also diminished is the maximum possible size of the shear. The fibre can be anchored to the opposite wall of chamber K or to a component that is connected to it. It may, for instance, be looped around chamber K to anchor together the lower and the upper walls of the chamber, or designed to intersect one wall of the chamber and to become anchored to the surrounding material. The fibres can only be connected to the components described in a portion of their length and/or of their number and then in the other portion of their length be connected to other elements that are not described here.

### Example 2

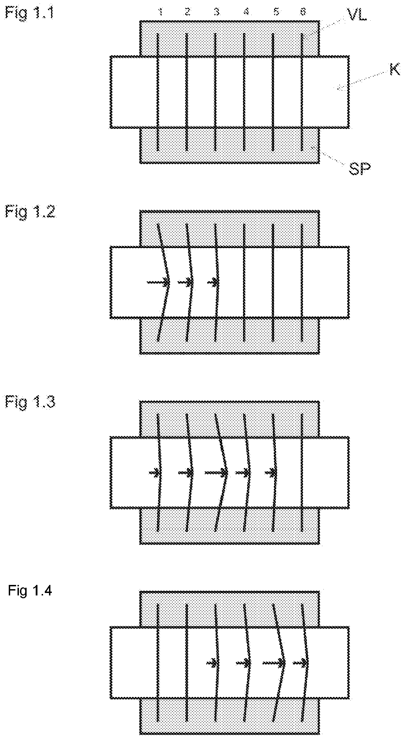

In Fig. 1.1 chamber K is placed on surface SP, which may, for example, be the inner tube of tyre P or one of the actual layers of tyre P or even an entirely other part that is located on the wheel. The chamber may then be covered with an additional layer, so that, for example if layer SP is actually meant to be the layer of tyre P and chamber K is on it together with another layer of the tyre, the external appearance of tyre P does not need to be different than that of a regular tyre. Chamber K, which can be viewed on the images from above, has the shape of a hollow tube, i.e. we do not see inside it.

In Fig. 1.1, the fibres that are guided across chamber K are connected both to it and to layer SP. In Fig. 1.2, the location of chamber K is affected by deformation of the tyre, which arrives into chamber K from the left and deforms and rolls ahead the chamber wall, resulting in a dilatation of fibres VL in direction from left to right. In Figures 1.3 and 1.4 the deformation has already progressed further and the fibres on the left side are re-adjusting. The deformation does not accumulate beyond the extent that the fibres permit. Otherwise it could happen, for example, that the deformation could accumulate for the entire period of a revolution and would be released only once per revolution in the form of shearing of the upper wall of chamber K against the opposite, lower, wall of chamber K at a single point. This would weaken this place, which would then also become a natural candidate for shearing during the subsequent revolution, and with each revolution, this trend would increase and this place would rapidly be destroyed. Fibres SP, however, distribute this potential destruction across a greater part or the entire length of chamber K. This example describes a solution implemented by using a peristaltic pump; similarly, however, it is also applicable to other pumps, where the opposite walls of the pump come into a contact with each other, e.g. a diaphragm pump.

### Example 3

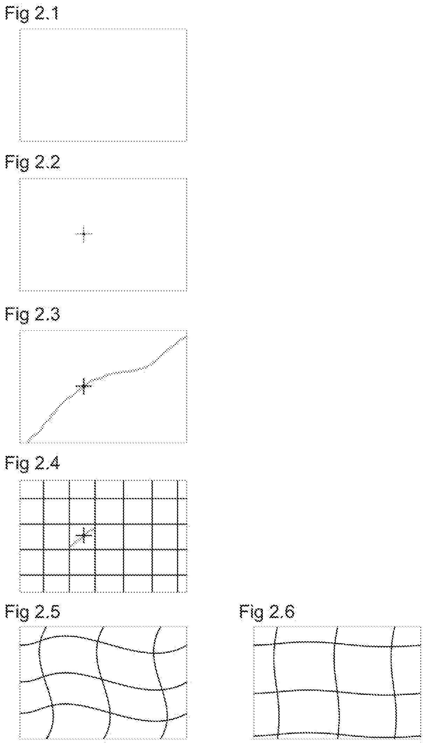

By default, the inner tube of the tyre is produced from an elastic material. Fig. 2.1 shows the selected rectangle of the inner tube surface at the point where damage does occur, for example by puncturing. In Fig. 2.2 the puncture in the inner tube is marked by a cross, together with a dot. Since the inner tube is made of an elastic material and the pressure inside it is high, punctures spread in the form of a crack that almost immediately causes a rupture and a loss of pressure in the inner tube. This is shown in Fig. 2.3 as a freehand grey line; the crack propagates across the rectangle, and perhaps even behind it, through the surface of the inner tube. This can be prevented, however, if an adjustment of the inner tube is implemented as is shown in Fig. 2.4. In Fig. 2.4, the inner tube is fitted with a fabric or another grid that will prevent the crack from spreading. Thereby the length of the crack will reach only as far as to the nearest fibre of the grid. This is an advantageous solution, especially in combination with reinflating tyres, that will gradually reinflate, compensating for the air escaping from the inner tube and if the actual inner tube also represents a carrier for a peristaltic or another type of pump, the inflated inner tube will support this pump in its working position. A similar effect can be achieved by replacing or covering the inner-tube material with a non-elastic material or a material that is resistant to crack propagation. Either the entire inner tube or only its exposed parts, e.g. the tread, can be covered. The fibres do not need to have a square pattern, as shown in Fig. 2.2 but, for example, they can also have triangular or other kinds of patterns. The fibres can also be arranged diagonally, which will ensure that the inner tube can be stretched during the filling of the tyre, while if because the fibres are moving away from each other, they will still capture and define the maximum length of the crack. The fibres may also be wavy, as can be seen in Fig. 2.5, and thereby enable the stretching of the inner tube as is shown in Fig. 2.6, whereby the fibres re-adjust a little and the space between them increases, but the fibres will still define the maximum crack length (between them). The fibres may also be produced from a combination of textile and rubber materials as it is used, for example, for elastic bands that are used in clothes, that are elastic but also have a defined maximum length at which the stretching is terminated at this pre-defined length. These rubber-bands, for example, are spirally braided with a yarn and have a predetermined length.

The inner tube may also be made from inelastic or plastic materials, which ensures their essential impermeability, such as for impermeable textiles, foils, carbon and other similar types of products. This prevents any rapid deflation, or for example, in the case of using carbon, it increases its puncture resistance. An inner tube of this kind may then advantageously constitute a pump for re-inflating tyres.

### Example 4

By default, the inner tube D of tubed tyre P is separated from its external environment O by a valve, whereas the space between tyre P and inner tube D is not hermetically separated from its surroundings. If the inner tube D is punctured, air from the inner tube D immediately escapes into tyre P and subsequently around valve V out of the tyre-rim assembly. This instant deflation is highly dangerous and represents one of the major disadvantages of tubed tyres. It is possible to create tyre P, which although it has an inner tube D that normally secures the hermeticality itself, the actual tyre P itself is additionally hermetically separated from its external environment O. This makes sense, especially with regard to the self-inflatable tyre P, in which the inner tube D acts primarily as the carrier of a reinflatable device; in the case that any defect appears, however, this combination will have the same degree of resistance against rapid deflation as tubeless tyre P.

This is achieved in the following manner. Inner tube D is fitted with valve V, which, in addition to sealing the interior of inner tube D, also hermetically separates the space between inner tube D and the cavity formed by tyre P and the rim from their surroundings. In this manner, valve V has a similar sealing function as the usual valve of a contemporary tubeless tyre.

Since valve V would prevent the necessary degree of inflation of inner tube D and would thereby prevent the possibility of forcing the air out of tyre P, so that inner tube D could assume its proper position and fill the entire volume of tyre P, the valve or the wheel assembly must be provided with an outlet that enables venting the spaces between inner tube D and tyre P and the rim. After this venting, the outlet is closed and thereby prevents any further leakage of air from tyre P. Closing the outlet in this manner does not hermetically seal the interior of tyre P from its external environment O until the commencement of venting the air from the space between tyre P and inner tube D.

The valve, in accordance with the present invention, may have a similar shape to that of the current tubeless valve that has the shape of a plug, which has to be forcibly drawn into its position in the rim. If, prior to the final fitting-in-place of the valve V body, there should be a leak in the side of valve V, for example, or another gap appears between the rim and the body of valve V through which air can escape, while inflating inner tube D, tyre P will also be vented through this gap. After inflating inner tube D to the same full volume as tyre P and forcing air from between inner tube D and tyre P, inner tube D, by its own pressure, can insert valve V to its final position in the rim and thereby seal the entire system. The valve can also be fitted into its final position either manually or else mechanically, or it can be sealed to the rim by means of a nut with a gasket, in a similar manner as is currently used in the case of tubeless valves. It is also possible to vent the space between the tyre and the rim through an additional gap or outlet, which is subsequently sealed. Air can, for example, be forced out between tyre P - around its bead - and the rim, until the moment at which the pressure of inner tube D on tyre P and its bead is sufficient to enable the bead to snap into its proper position in which it is sealed against the rim. The bead may also be fitted into the side of the rim, for example, with a gap or a channel that enables the air to escape and after the bead snaps into its final position this gap will disappear so that it actually no longer connects the cavity between tyre P and inner tube D to its surroundings.

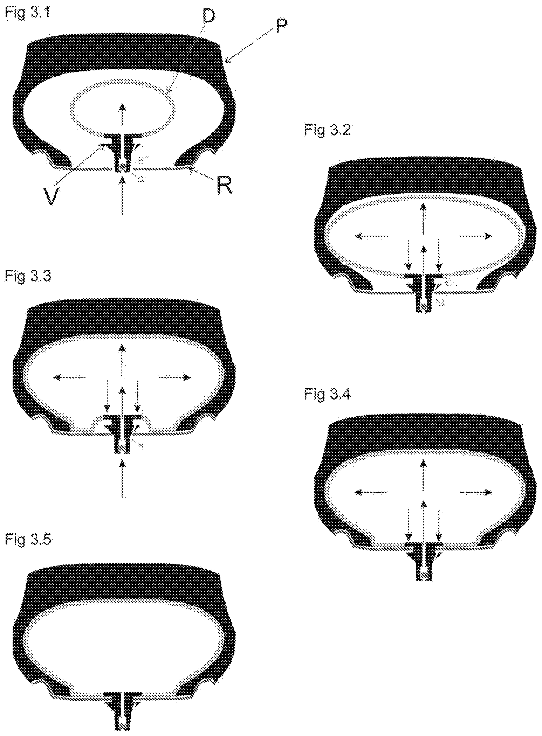

Fig. 3.1 depicts tyre P with inner tube D and valve V. Whereas inner tube D is inflated through valve V, as is shown by the continuous arrows, the air from the wheel space around inner tube D (marked in grey) is forced out around valve V and into the atmosphere, as is indicated by the dotted arrows. Fig. 3.2 illustrates the expansion of inner tube D, as is indicated by the dashed arrows, and while valve V abuts the rim; its wall, however, is provided with a channel that continuously vents air from the space between inner tube D and tyre P and rim R, as indicated by the dotted arrows. In Fig. 3.3, inner tube D already occupies almost the entire volume of tyre P, with the exception of a small area located around the actual valve V; the pressure of inner tube D increases and pushes onto valve V until it is inserted into its final position (depicted in Fig. 3.4), at which point there is only a minimal amount of or no residual air between tyre P and inner tube D. After tyre P has been reinflated to its operational pressure, the system stabilises in the status shown in Fig. 3.5. In the event of any imminent destruction of inner tube D, the air in inner tube D escapes only into the area that is enclosed by tyre P, rim R and the valve of inner tube D. This solution is advantageous if the inner tube is supplied for the tyre or for the tubeless tyre to specifically be the carrier of a pump device, a peristaltic pump for example, or a source of compressed air to be utilised for driving the mechanical equipment. This example describes the solution whereby the air that is forced out from the inner tube escapes around the valve, though it may, similarly and advantageously, escape from the wheel assembly through another point, if the assembly, after dispensing the requisite volume of air, has been re-sealed.

### Example 5

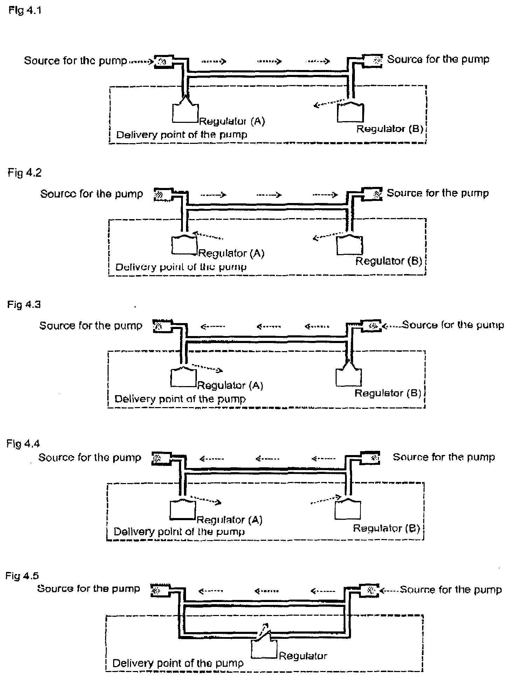

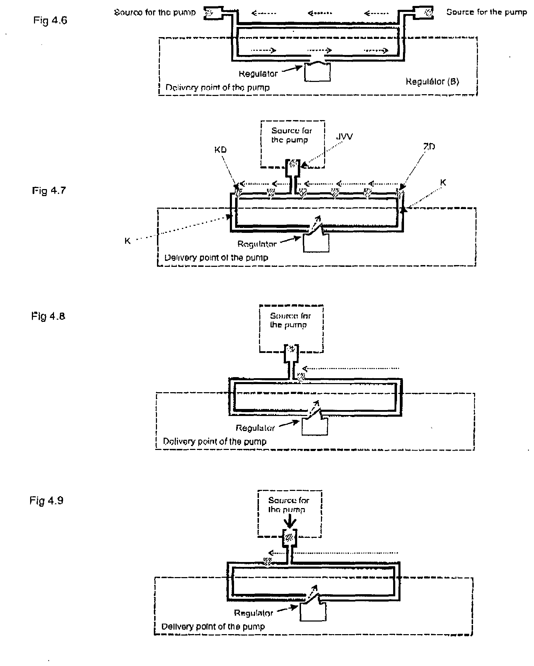

The applicant additionally describes in the present invention a new solution that enables inflation in both of the directions of rotation of the tyre, while ensuring relief of the chamber by means of internal or external circulation whereby, with the exception of during inflating, air is transported only through the enclosed chamber or it is returned to the place from which it was taken. For example to the tyre, the reservoir or to the external environment of the tyre. A solution like this is shown in Figures 4.1 to 4.6, in which Fig. 4.1 depicts reinflating from the source, e.g. from the external environment of the tyre, via a peristaltic pump and a right-hand regulator that has diaphragm B, formed in this case by a referential space with a diaphragm, but it can also be of a different type, electronic or mechanical, or utilising a vane, a blade, a spring etc.; in principle any method that arrests or slows down the flow of air through the specific inlet to the delivery point of the pump which, in this case, is a tyre. If the tyre - the delivery point of the pump - is underinflated, the diaphragm of regulator A closes the inlet and a vacuum is formed in the pump, which opens the left-hand inlet valve LVV and initiates the sucking of air into the chamber and then pushes it around diaphragm B to the delivery point of the pump - to the tyre - as identified by the dashed arrows. Both diaphragm A and diaphragm B attempt to eject because they both respond to the underpressure in the tyre; diaphragm B, however, is moved by the air that flows from the chamber. If the regulator comprises an element that is not moved by the flowing air, it is possible to incorporate a separate one-way valve next to it, one that will release this air from the pump to the tyre. A unidirectional valve of this kind can be installed for each of the regulators or for each inlet from the chamber to the tyre. Fig. 4.2 depicts the scenario in the case of a properly inflated tyre. The regulators' diaphragms are retracted and the air circulates in the direction indicated by the dashed arrows. Figures 4.3 and 4.4 show the same situation, but the wheel is rotating in the opposite direction and thereby the direction of the air-flow has also reversed, which results in the opposite engagement of the individual elements in comparison with Figures 4.1 and 4.2. Figures 4.5 and 4.6 illustrate their unification into a single regulator, in this instance with a single diaphragm; a regulator with two or more diaphragms can also fulfil a similar function, however. The tyre shown in Fig. 4.5 is underinflated and the diaphragm has been ejected and this closes the left-hand inlet to the chamber. At the same time the diaphragm has been pushed aside by the air flowing out of the left-hand outlet from the chamber and air is now flowing into the tyre. On the right-hand side a vacuum has formed which opens the right-hand inlet valve PVV and starts sucking air from the source for the pump until the tyre has been reinflated and the diaphragm has been retracted into the regulator. The regulator illustrated is not necessarily a diaphragm regulator; it may be based on a blade, be electronic, a vane, a spring or another mechanical device. Inlet valves PVV and LVV can be combined as a single inlet valve JVV, which may substitute one of these or be anywhere else in the circuit. Such a situation is depicted in Figures 4.7 to 4.9.

In Fig. 4.7, valve JVV is located in a place between the original location of valves LVV and PVV. Also indicated is the deformation of chamber K, which is marked with grey tips that interrupt the chamber sequentially at 6 different points. In fact, this represents a single interruption of the chamber that occurs six times consecutively, with the proviso that this interruption progresses between these positions following the directions of the dotted arrows. The starting-point of the deformation is identified as ZD and its end-point is shown as KD. The delivery point of the pump (in this example the tyre, although there can also be another reservoir and another delivery point) is deflated and the diaphragm of the regulator closes the right-hand inlet to chamber K.

Fig. 4.8 illustrates a situation in which the deformation has shifted from point ZD to the grey-tip points along the dotted arrow. The gas, in this example the air enclosed in chamber K, originally from between the diaphragm of the regulator and point ZD, has now expanded to the grey-tip point while its pressure reduced and a vacuum was created there with a pressure lower than that of the source for the pump. In this example the pressure of the external environment is O, which represents 1 atmosphere. At the same time, the air that was originally present in the area between point ZD and the current location of the tip was fed in the direction of the dotted arrow to the left part of chamber K and additionally around regulator R to the tyre.

In Fig. 4.9 the tip of the deformation has already shifted through the chamber behind the connecting point of valve JVV, whereupon it came into contact with the vacuum created in this part of the chamber; the JVV is opening and the pressure in this part is evened up with the pressure at the source for the pump.

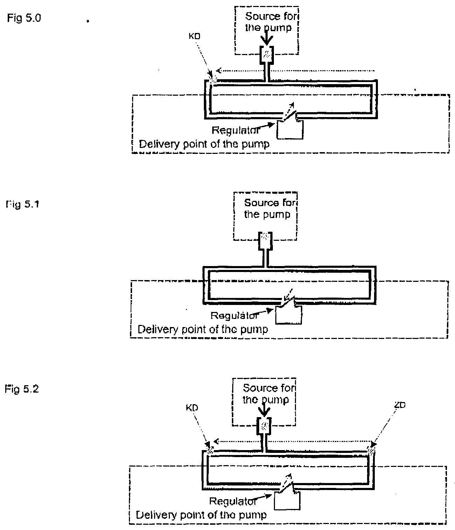

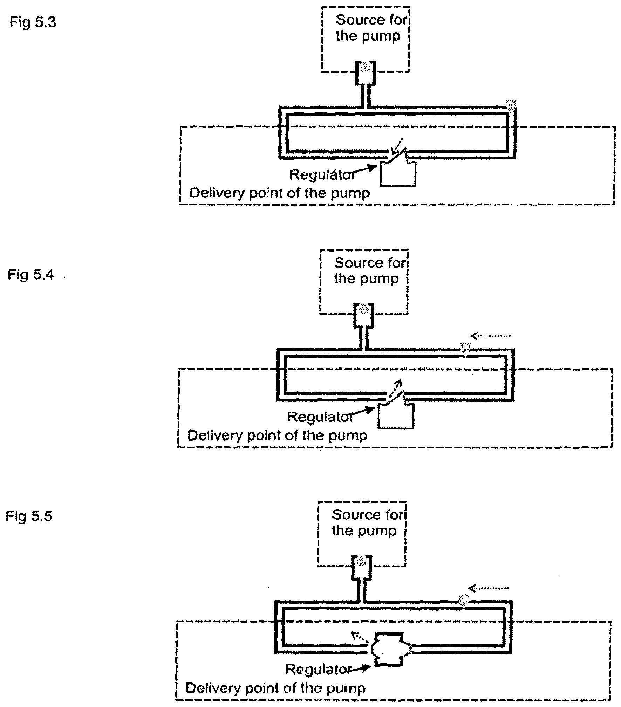

In Fig. 5.0 the deformation shifts to point KD, while in the chamber to the left of it the air is additionally compressed and is then fed to the tyre, while in the chamber to the right of the deformation the sucking of air through the JVV continues to take place. If the deformation then leaves the chamber, as indicated in Fig. 5.1, in which the tip does not interrupt chamber K, valve JV closes and the tyre pressure fills the entire chamber, as indicated by the dotted arrow, around the diaphragm of regulator R to chamber K. The volume of air in the tyre and in the chamber has increased in accordance with the volume sucked-in from the surroundings, as indicated in Figures 4.9 to 5.0.

Another possibility is that before the deformation leaves the chamber at point KD, this deformation again affects chamber K in another area, for example in point ZD, as shown in Fig. 5.2. Until this moment, the sucking of air via the JVV and its feeding into the tyre has taken place as indicated by the dotted arrow by the regulator. From the termination-point of the deformation at the point KD valve the JVV is closed and the pressure evens-up towards the deformation illustrated by the grey tips. The evening-up of the pressure from the tyre to the chamber is indicated by a dotted arrow on the regulator R. Simultaneously, on the other side of the deformation and towards the end of the chamber closed by the diaphragm of regulator R the original vacuum still remains and thereby this area does not need to be vented again and this pump will have a greater degree of efficacy than the pump described in Fig. 5.1.

In Fig. 5.5 the deformation has already shifted and the new cycle continues and so does the compression of air in the tyre.

Valve JVV may also be placed differently than described in these examples; for instance, it does not need to be connected directly to the chamber that passes through the area of deformation, but it can also be closer to the regulator or to a part of one or both of the regulators. Depending on the conditions, an embodiment can be selected with the advantage that when it is placed next to one of the outlets of the chamber, in or opposite to the direction of deformation; reinflating will still function, however, regardless of the direction of rotation of the tyre.

The valve is described as being unidirectional, however it can be of any type that provides the necessary features, e.g. a two-way valve, a controlled valve, a multi-way valve, the closure element, the electronically-controlled element, an electronically-controlled valve, a gate valve, an element with referential pressure, a spring, a diaphragm.

Similarly, the regulator may also comprise any similar device.

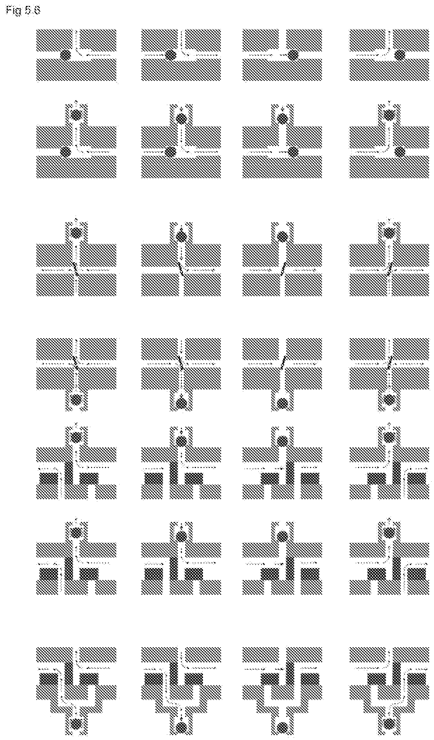

In order to ensure the bi-directional operation of the pump, it is also possible to use a simple valve together with a ball, a flap or a slide, which is moved by pumped air that closes unwanted directions and opens the desired air-flow directions. A valve of this type is shown in Fig. 5.6. The forces that are generated, for example, by means of a peristaltic pump are sufficient even in a rotating tyre, to shift the element and to maintain it in the required position. The arrows in the figures show how the pumped air works with a specific element and also how the air is thereby redirected in the requisite direction and how pumping is ensured or the input to or output from a peristaltic pump, either, for example, a classic one-way pump or one with internal or external circulation, etc., but also to/from other pumps.

### Example 6

Another solution is to use a pressure-release valve. Any pump and peristaltic chamber can also be used to release air from tyres; in this case the air can be pumped out of the tyre in the direction of the pressure-release valve. The pressure-release valve can be set so that, for example, it switches off at a pressure of 10 atm., thereby releasing the air. If, for example, the optimum tyre pressure is 3 atm. and this is exceeded to 3.1 atm., the pump will start pumping air in the direction of the pressure-release valve. At the moment when the pressure in the pump exceeds 10 atm. next to the pressure-release valve, the valve will open and the pump will drain the excess air away through it. A pressure-release valve set at 10 atm. is both simple to operate and also very safe. It is not the actual tyre pressure that opens it; it opens only based on the positive pressure provided by the pump. The pump can be controlled by a regulator, a diaphragm or by other means; it may be unidirectional or bidirectional and have internal or external circulation or any other peristaltic or other type of pump.

### Example 7

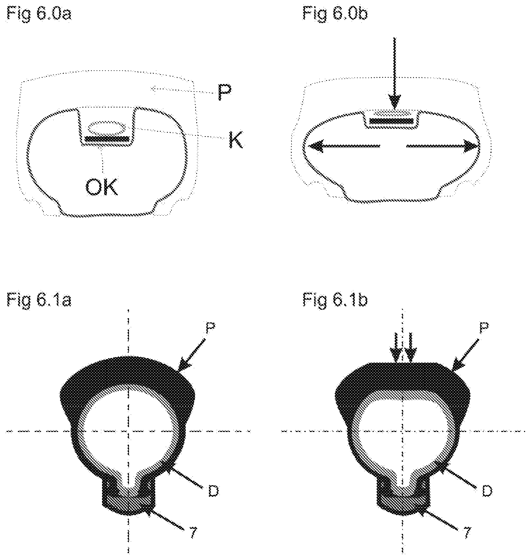

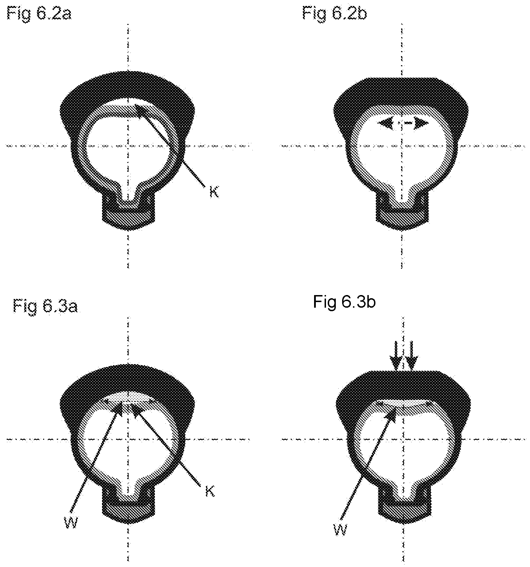

The invention is additionally related to the bridging of the inner tube. Figures 6.0a and 6.0b below illustrate the usual tubed car tyres. If there is a chamber K created underneath the tread, the tread will lose part of its camber and may begin to collapse. This is illustrated in Fig. 6.0b, in which tyre pressure is acting internally on all its walls, with the exception of the tread where the chamber K is_located. The pressure on the tyre walls sets these sides apart, while, on the other, it pulls the tread down, thereby inadvertently closing chamber K. This can be prevented by the solution described below.

In Fig. 6.1b, in this example of a bicycle, a chamber K is created on inner tube D. Thereby, however, the original tyre tread would lose the support of inner tube D and would therefore collapse, as shown in Fig. 6.1b. This collapse would be caused by the pressure of the inner tube on the walls of tyre P, whereby the tread is pulled down and at the same time flattens and expands in width. This kind of collapse can be avoided by bridging chamber K, which is anchored to the sides of the chamber and thereby protecting the chamber against becoming dilated. The bridge may have the shape of the arch that in this case also retains the arched shape of the tread. However, the chamber, in accordance with the tread, can have any shape. Beneath the actual chamber a belt is then created, that by the pressure of the actual inner tube D prevents closing chamber K from below. The belt ensures that the inner tube in the place of chamber K does not exceed the diameter equal to, or smaller, than the lower diameter of chamber K. Fig. 6.2a shows bridging W above the chamber anchored at the points that are marked X, with a full arched vault above the bridge that is formed beneath the tread. Chamber K has so far been illustrated excluding the places of deformation caused by the road and the chamber has been open. In Fig. 6.2b the chamber is deformed through contact with the road in the direction of the arrows until this deformation causes the desired closing of chamber K by the deformation of the tread and the camber towards the interior of chamber K.

### Example 8

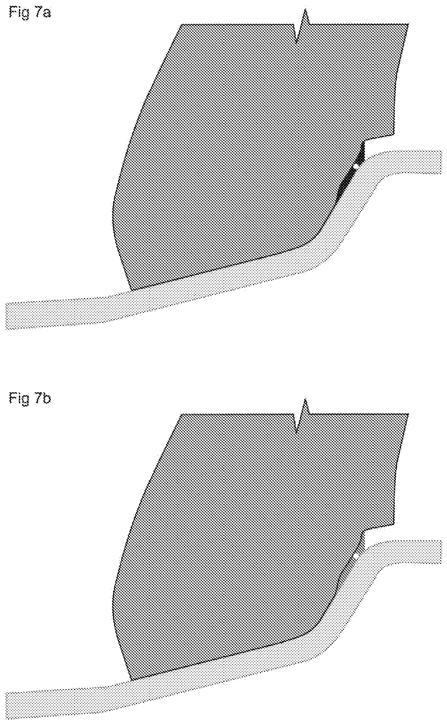

The peristaltic chamber in the wall of the tyre can be a source of the initiation and propagation of cracks that endanger the operational life of tyres. The solution is a chamber K created in a part that is physically separated from the structure of tyre P. By means of this separation the crack is then arrested. This can be seen in Fig. 7a. Another solution is that of forming a chamber K in a part connected with the tyre, though a barrier preventing the propagation of the crack, such as a textile wall, foil or other barrier material inserted between the parts, which will either redirect the crack or halt it. This can be seen in Fig. 7b.

The examples describe using vehicle tyres; however their advantages can be useful in any machines that use air-filled tyres, including such stationary machinery as lifts, conveyor belts on which the belts are stretched on tyres, etc.

### Industrial utility

In accordance with this invention, the chamber with shape memory for the pressure adjustment of tyres will find its application in the manufacturing of new tyres as well as for the adjustment of existing tyres, for both passenger and utility vehicles.

## Claims

1. A chamber, with a shape memory for the pressure adjustment of tyres, that is connected at one end to the medium delivery point and at the other end to the source of the medium, ***is characterised by the feature that*** fibres are installed across at least a part of the wall of the chamber (K) at a distance of between 0.001 and 200 mm, which connect the opposite walls of the chamber (K).

2. The chamber, in accordance with claim 1, ***is characterised by the feature that*** fibres connect the wall of the chamber (K) to the carrier of the chamber (K) and/or the fibres are placed on the carrier of the chamber (K) and/or on the inner tube (D).

3. The chamber, in accordance with claim 1 or 2, ***is characterised by the feature that*** the medium delivery point and/or a source of the medium is the interior of the tyre (P) and/or the external environment of the tyre (P) and/or the reservoir and/or the inner tube (D) and/or the interior of the valve and/or of the regulator.

4. The chamber, in accordance with any of the previous claims, ***is characterised by the feature that*** the medium is either air, nitrogen or another gas, or a gas mixture.

5. The chamber, in accordance with any of the previous claims, ***is characterised by the feature that*** the fibres interconnect the wall of the inner diameter of the chamber (K) with the wall of the outer diameter of the chamber (K).

6. The chamber, in accordance with any of the previous claims, ***is characterised by the feature that*** the fibres are arranged in parallel to each other.

7. The chamber, in accordance with any of the previous claims, ***is characterised by the feature that*** the fibres create patterns and/or polygonal patterns, and/or they intersect.

8. The chamber, in accordance with any of the previous claims, ***is characterised by the feature that*** the fibres are skewed.

9. The chamber, in accordance with any of the previous claims, ***is characterised by the feature that*** the fibres are wavy and/or elastic.

10. The chamber, in accordance with any of the previous claims, ***is characterised by the feature that*** the carrier of the chamber is the tyre and/or an inner tube (D) and/or an ancillary structure.

11. The chamber, in accordance with claim 10, ***is characterised by the feature that*** the chamber is connected to the carrier by fibres.

12. The chamber, in accordance with any of the previous claims, ***is characterised by the feature that*** the fibres constitute a feature of the bridge (W) of the chamber (K) and/or of the tyre (P) and/or of the inner tube (D) and/or of the ancillary structure, which prevents the collapse of the chamber (K), with the exception of the effect that the tyre's deformation load has on the chamber (K).

13. The chamber, in accordance with any of the previous claims, ***is characterised by the feature that*** under the actual chamber and/or as part of the chamber, there is a belt to prevent closing the chamber from below by means of the pressure of the inner tube itself.

14. The chamber, in accordance with claim 13, ***is characterised by the feature that*** the belt contains fibres.

15. The chamber, in accordance with any of the previous claims, ***is characterised by the feature that*** the chamber is provided with a bridge that is anchored to the sides of the chamber and thereby the chamber is protected against dilation.

16. The chamber, in accordance with any of the previous claims, ***is characterised by the feature that*** it comprises an inner tube, which is made of an elastic material and is at least partially provided with a pattern of fibres for arresting crack propagation.

17. The chamber, in accordance with any of the previous claims, ***is characterised by the feature that*** the chamber (K) and/or its carrier is at least partially covered with a grid for arresting the propagation of cracks.

18. The chamber, in accordance with any of the previous claims, ***is characterised by the feature that*** bridging and/or the belt and/or the pattern for arresting the propagation of cracks and/or the grid is made of fibres.

19. The chamber, in accordance with any of the previous claims, ***is characterised by the feature that*** the fibres are textile and/or metal and/or plastic and/or natural fibres and/or synthetic fibres and/or nanofibers.

20. The chamber in accordance with any of the previous claims, ***is*/*are characterised by the feature that*** the chamber and/or its carrier is/are connected to fibres that are wavy and/or elastic enough to enable the dilation of the chamber (K) and/or of its carrier.

21. The chamber, in accordance with any of the previous claims, ***is characterised by the feature that*** it is located, at least partially, in the section that is separated from the tyre material by a layer of another material and/or that is located in a separate removable unit.

22. The chamber, in accordance with claim 21, ***is characterised by the feature that*** the layer of said other material consists of fibres, a fabric and/or a film and/or another form of separator.

23. The chamber, in accordance with any of the previous claims, is intended as a wheel either for the vehicle and/or another machine and/or equipment, including stationary equipment.

24. A device comprising the chamber in accordance with claim 5, ***is characterised by the feature that*** of the input and/or the output of the pump (K) there is a part with a minimum defined volume.

25. A device comprising a chamber in accordance with any of the previous claims, ***is characterised by the feature that*** the interior wall of the pump (K) is fitted with the ring (OK), whereas the distance of its outer side from the rotation axis of the tyre (P) is equal to 1 to 1.1 times the distance of the lower part of the pump (K) from the rotation axis of the tyre (P).

26. A device comprising a chamber in accordance with any of the previous claims, ***is characterised by the feature that*** the pump (K) is designed in the shape of a curved hollow channel, at least one peripheral wall which is at least partially formed by a section of the pair of surfaces that lie in the longitudinal direction of the pump (K) and that are mutually positioned at an angle of α = 0 to 120°, whereas should the angle be α > 0°, it would be placed at the connecting edges of these surfaces, located on the far side of the centre of the cross sectional area of the pump (K).

27. The chamber or device in accordance with any of the previous claims, ***is characterised by the feature that*** the length of the chamber is greater than the length of the circumference of the tyre (P) that remains undeformed by its contact with the road.

28. The chamber or device in accordance with any of the previous claims, ***is characterised by the feature that*** the length of the chamber is smaller than the length of the tyre circumference that remains undeformed by its contact with the road.

29. The chamber or device in accordance with any of the previous claims, ***is characterised by the feature that*** the ends of the chamber are adjacent to each other or are closer to each other than the length of 10% of the tyre circumference.

## Patentansprüche

1. Kammer mit Formgedächtnis zum Einstellen des Reifendrucks, verbunden an einem Ende mit dem Ziel des Mediums und am anderen Ende mit der Quelle des Mediums, ***gekennzeichnet dadurch, dass*** quer durch mindestens einen Teil der Wand der Kammer (K) in einem Abstand von 0,001 bis 200 mm Fasern angeordnet sind, die gegenüberliegende Wände der Kammer K)verbinden.

2. Kammer nach Anspruch 1, ***gekennzeichnet dadurch, dass*** die Fasern die Wand der Kammer (K) mit dem Träger der Kammer (K) verbinden und/oder die Fasern auf dem Träger der Kammer (K) angeordnet sind und/oder auf dem Schlauch (D).

3. Kammer nach Anspruch 1 oder 2, ***gekennzeichnet dadurch, dass*** das Ziel des Mediums und/oder die Quelle des Mediums der Innenraum des Reifens (P) und/oder die Umgebung des Reifens (P) und/oder das Reservoir und/oder der Schlauch (D) und/oder das Innere des Ventils und/oder des Reglers ist.

4. Kammer nach einem der vorigen Ansprüche, ***gekennzeichnet dadurch, dass*** das Medium Luft, Stickstoff oder ein anderes Gas oder eine andere Gasmischung ist.

5. Kammer nach einem der vorigen Ansprüche, ***gekennzeichnet dadurch, dass*** die Fasern die Wand am Innendurchmesser der Kammer (K) mit der Wand am Außendurchmesser der Kammer (K)verbinden.

6. Kammer nach einem der vorigen Ansprüche, ***gekennzeichnet dadurch, dass*** die Fasern parallel sind.

7. Kammer nach einem der vorigen Ansprüche, ***gekennzeichnet dadurch, dass*** die Fasern Mustern und/oder mehrwinkelige Muster bilden und/oder gekreuzt sind.

8. Kammer nach einem der Ansprüche, ***gekennzeichnet dadurch, dass*** die Fasern windschief sind.

9. Kammer nach einem der vorigen Ansprüche, ***gekennzeichnet dadurch, dass*** die Fasern gewellt und/oder elastisch sind.

10. Kammer nach einem der vorigen Ansprüche, ***gekennzeichnet dadurch, dass*** der Träger der Kammer der Reifen und/oder der Schlauch (D) und/oder eine Zusatzformation ist.

11. Kammer nach Anspruch 10, ***gekennzeichnet dadurch, dass*** die Kammer mit dem Träger der Kammer mit Fasern verbunden ist.

12. Kammer nach einem der vorigen Ansprüche, ***g*ekennzeichnet *dadurch, dass*** die Fasern ein Teil der Trennwand (W) der Kammer (K) und/oder des Reifens (P) und/oder des Schlauchs (D) und/oder der Zusatzformation sind, die das Zusammenstürzen der Kammer (K) außerhalb der Belastung der Kammer (K) durch Verformung verhindert.

13. Kammer nach einem der vorigen Ansprüche, ***gekennzeichnet dadurch, dass*** unter der Kammer selbst, und/oder als Teil der Kammer ein Streifen errichtet ist, um zu verhindern, dass die Kammer durch den Druck des Schlauchs selbst von unten verschlossen wird.

14. Kammer nach Anspruch 13, ***gekennzeichnet dadurch, dass*** der Streifen Fasern umfasst.

15. Kammer nach einem der vorigen Ansprüche, ***g**e**kennzeichnet dadurch, dass*** die Kammer mit einer Trennwand versehen ist, die an den Seiten der Kammer verankert ist und die Kammer dadurch gegen Ausdehnung geschützt ist.

16. Kammer nach einem der vorigen Ansprüche, g***e*kennzeichnet *dadurch, dass*** deren Teil der Schlauch des Reifens ist, der aus elastischem Material besteht und zumindest teilweise mit einem Fasermuster versehen ist, um die Ausbreitung von Rissen zu verhindern.

17. Kammer nach einem der vorigen Ansprüche, ***g**e**kennzeichnet dadurch, dass*** die Kammer (K) und/oder deren Träger zumindest teilweise mit einem Gitter zur Verhinderung der Ausbreitung von Rissen versehen ist.

18. Kammer nach einem der vorigen Ansprüche, **gekennzeichnet *dadurch, dass*** die Trennwand, der Streifen, das Muster zur Verhinderung der Ausbreitung von Rissen und/oder das Gitter aus Fasern gebildet sind.

19. Kammer nach einem der vorigen Ansprüche, **gekennzeichnet *dadurch, dass*** die Fasern Textil- und/oder Metall- und/oder Kunststoff- und/oder Naturfasern und/oder synthetische Fasern und/oder Nanofasern sind.

20. Kammer nach einem der Ansprüche, ***gekennzeichnet dadurch, dass*** sie mit Fasern verbunden ist, die gewellt und/oder elastisch zur Ausdehnung der Kammer (K) und/oder des Trägers der Kammer sind.

21. Kammer nach einem der vorigen Ansprüche, ***g**e**kennzeichnet dadurch, dass*** sie zumindest teilweise in einem Teil angeordnet ist, der vom Material des Reifens durch eine Schicht eines anderen Materials getrennt ist und/oder von separater abnehmbarer Formation getrennt ist.

22. Kammer nach Anspruch 21, ***gekennzeichnet dadurch, dass*** die Schicht eines anderen Materials aus Fasern, Gewebe und/oder Folie und/oder einem anderen Separator besteht.

23. Kammer nach einem der vorigen Ansprüche, ***g*ekennzeichnet *dadurch, dass*** das sie für ein Rad eines Fahrzeugs und/oder einer anderen Maschine und/oder Einrichtung einschließlich stationärer Einrichtung bestimmt ist.

24. Einrichtung mit einer Kammer nach Anspruch 5, ***gekennzeichnet dadurch, dass*** am Eingang und/oder Ausgang der Pumpe (K) ein Teil mit einem vorgegebenen Mindestvolumen ist.

25. Einrichtung mit einer Kammer nach einem der vorigen Ansprüche, ***gekennzeichnet dadurch, dass*** an der Innenseite der Pumpe (K) ein Ring (OK) angeordnet ist, der Abstand seiner äußeren Seite von der Drehachse des Reifens (P) ist das 1 bis 1,1-fache des Abstandes der unteren Seite der Pumpe (K) von der Drehachse des Reifens (P).

26. Einrichtung mit einer Kammer nach einem der vorigen Ansprüche, ***gekennzeichnet dadurch, dass*** die Pumpe (K) die Form eines gekrümmten Hohlkanals hat, dessen mindestens eine Umfangswand mindestens teilweise aus mindestens einem Teil von Paarflächen besteht, die in Längsrichtung der Pumpe (K) liegen und unter einem Winkel von α = 0 bis 120° angeordnet sind, wobei wenn der Winkel α > 0° ist, ist er an der Verbindungskante dieser Flächen angeordnet, die sich auf der anderen Seite von Flächenmitte des Querdurchschnitts der Pumpe (K)befinden.

27. Kammer oder Einrichtung nach einem der vorigen Ansprüche, ***gekennzeichnet dadurch, dass*** die Länge der Kammer größer als die Länge des Kontakts mit der Fahrbahn des unverformten Umfangs des Reifens (P) ist.

28. Kammer oder Einrichtung nach einem der vorigen Ansprüche, ***gekennzeichnet dadurch, dass*** die Länge der Kammer kleiner als die Länge des Kontakts mit der Fahrbahn des unverformten Umfangs des Reifens ist.

29. Kammer oder Einrichtung nach einem der vorigen Ansprüche, ***gekennzeichnet dadurch, dass*** die Enden der Kammer benachbart oder zueinander näher sind als die Länge von 10 % des Reifenumfangs ist.

## Revendications

1. Chambre à mémoire de forme pour régler la pression dans le pneu, reliée à l'une extrémité à la cible du fluide et à l'autre extrémité à la source du fluide, **caractérisée en ce que** les fibres sont disposées à travers au moins une partie de la paroi de la chambre (K) à une distance de 0,001 à 200 mm les unes des autres et reliant les parois opposées de la chambre (K).

2. Chambre selon la revendication 1, **caractérisée en ce que** les fibres relient la paroi de la chambre (K) au support de la chambre (K) et/ou les fibres sont placées sur le support de la chambre (K) et/ou sur la chambre à air (D).

3. Chambre selon la revendication 1 ou 2, **caractérisée en ce que** la cible du fluide et/ou la source du fluide est l'espace intérieur du pneu (P) et/ou l'environnement du pneu (P) et/ou le réservoir et/ou la chambre à air (D) et/ou l'intérieur de la soupape et/ou du régulateur.

4. Chambre selon l'une quelconque des revendications précédentes **caractérisée en ce que** le fluide est l'air, l'azote ou un autre gaz ou mélange de gaz.

5. Chambre selon l'une quelconque des revendications précédentes **caractérisée en ce que** les fibres relient la paroi du diamètre intérieur de la chambre (K) à la paroi du diamètre extérieur de la chambre (K).

6. Chambre selon l'une quelconque des revendications précédentes **caractérisée en ce que** les fibres sont parallèles les unes aux autres.

7. Chambre selon l'une quelconque des revendications précédentes **caractérisée en ce que** les fibres forment des motifs et/ou des motifs à plusieurs angles et/ou sont croisées.

8. Chambre selon l'une quelconque des revendications, **caractérisée en ce que** les fibres sont non parallèles.

9. Chambre selon l'une quelconque des revendications précédentes, **caractérisée en ce que** les fibres sont ondulées et/ou élastiques.

10. Chambre selon l'une quelconque des revendications précédentes, **caractérisée en ce que** le support de la chambre est un pneu et/ou une chambre à air (D) et/ou une formation supplémentaire.

11. Chambre selon la revendication 10, **caractérisée en ce que** la chambre est reliée au support de la chambre par les fibres.

12. Chambre selon l'une quelconque des revendications précédentes, **caractérisée en ce que** les fibres font partie du cloisonnement (W) de la chambre (K) et/ou du pneu (P) et/ou de la chambre à air (D) et/ou de la formation supplémentaire empêchant l'affaissement de la chambre (K) hors la charge de la chambre (K) par déformation.

13. Chambre selon l'une quelconque des revendications précédentes, **caractérisée en ce que** sous la chambre elle-même et/ou faisant partie de la chambre une bande est formée pour empêcher la fermeture de la chambre du dessous par la pression de la chambre à air elle-même.

14. Chambre selon la revendication 13, **caractérisée en ce que** la bande comprend des fibres.

15. Chambre selon l'une quelconque des revendications précédentes, **caractérisée en ce que** la chambre est pourvue d'un cloisonnement qui est ancré sur les côtés de la chambre et la chambre est ainsi protégée contre la dilatation.

16. Chambre selon l'une quelconque des revendications précédentes, **caractérisée en ce qu'**elle intègre la chambre à air du pneu constituée en matériau élastique et pourvue au moins en partie d'un motif de fibres destiné à arrêter la propagation des fissures.

17. Chambre selon l'une quelconque des revendications précédentes, **caractérisée en ce que** la chambre (K) et/ou son support sont au moins partiellement recouverts d'une grille pour arrêter la propagation de la fissure.

18. Chambre selon l'une quelconque des revendications précédentes, **caractérisée en ce que** le cloisonnement, la bande, le motif pour arrêter les fissures et/ou la grille sont formés de fibres.

19. Chambre selon l'une quelconque des revendications précédentes, **caractérisée en ce que** les fibres sont les fibres textiles et/ou métalliques et/ou plastiques et/ou naturelles et/ou les fibres artificielles et/ou les nanofibres.

20. Chambre selon l'une quelconque des revendications, **caractérisée en ce qu'**elle est reliée à des fibres ondulées et/ou élastiques pour permettre la dilatation de la chambre (K) et/ou du support de la chambre.

21. Chambre selon l'une quelconque des revendications précédentes, **caractérisée en ce qu**'elle est au moins partiellement située dans la partie qui est séparée du matériau du pneu par une couche d'un autre matériau et/ou séparée en une formation amovible autonome.

22. Chambre selon la revendication 21, **caractérisée en ce que** la couche d'un autre matériau est constituée de fibres, de tissu et/ou de feuille et/ou d'un autre séparateur.

23. Chambre selon l'une quelconque des revendications précédentes, **caractérisée en ce qu'elle** est destinée à une roue de véhicule et/ou d'une autre machine et/ou dispositif, y compris un dispositif fixe.

24. Dispositif contenant la chambre selon la revendication 5, **caractérisé en ce qu'**à l'entrée et/ou à la sortie de la pompe (K) se trouve une partie ayant un volume minimal donné.

25. Dispositif contenant la chambre selon l'une quelconque des revendications précédentes, **caractérisé en ce qu'**un anneau (OK) est disposé à la paroi intérieure de la pompe (K), la distance entre ses parois extérieures et l'axe de rotation du pneu (P) étant de 1 à 1,1 fois la distance entre la partie inférieure de la pompe (K) et l'axe de rotation du pneu (P).

26. Dispositif comprenant une chambre selon l'une quelconque des revendications précédentes, **caractérisé en ce que** la pompe (K) se présente sous la forme d'un canal creux incurvé dont au moins une paroi périphérique est formée au moins en partie par au moins une paire de surfaces s'étendant dans la direction longitudinale de la pompe (K) et positionnées l'une par rapport à l'autre selon un angle α = 0 à 120°, et si l'angle α > 0°, celui-ci est situé au niveau du bord de contact de ces surfaces, et sur le côté plus éloigné du centre de la surface de la section transversale de la pompe (K).

27. Chambre ou dispositif selon l'une quelconque des revendications précédentes, **caractérisé en ce que** la longueur de la chambre est supérieure à la longueur de la circonférence du pneu non déformée (P) et son contact avec le sol.

28. Chambre ou dispositif selon l'une quelconque des revendications précédentes, **caractérisé en ce que** la longueur de la chambre est inférieure à la longueur de la circonférence du pneu non déformée (P) et son contact avec le sol.

29. Chambre ou dispositif selon l'une quelconque des revendications précédentes, **caractérisé en ce que** les extrémités de la chambre sont adjacentes ou rapprochées les unes des autres par rapport à la longueur de 10% de la circonférence du pneu.
